## Europäisches Patentamt

## European Patent Office

## Office européen des brevets

(11) Publication number: **0 122 107**
**B1**

(12) ## EUROPEAN PATENT SPECIFICATION

(45) Date of publication of patent specification: **23.05.90**

(51) Int. Cl.⁵: **H 01 J 61/36**

(21) Application number: **84302272.4**

(22) Date of filing: **03.04.84**

(54) Electrical lead-ins for use for arc sustaining atmospheres.

(30) Priority: **04.04.83 US 481689**

(43) Date of publication of application:
**17.10.84 Bulletin 84/42**

(45) Publication of the grant of the patent:
**23.05.90 Bulletin 90/21**

(84) Designated Contracting States:
**BE DE FR GB IT NL**

(56) References cited:
**DE-A-2 426 440**
**DE-A-2 732 060**

(73) Proprietor: **GTE Products Corporation**
**100 West 10th Street**
**Wilmington, DE 19801 (US)**

(72) Inventor: **Bouchard, Andre C.**
**43, Gardner Street**
**Peabody Massachusetts 01960 (US)**
Inventor: **Lagushenko, Radomir**
**1817 Beacon Street**
**Brookline Massachusetts 02146 (US)**
Inventor: **Thibault, Paul A.**
**7, Loris Road**
**Danvers Massachusetts 01923 (US)**

(74) Representative: **Bubb, Antony John Allen et al**
**GEE & CO. Chancery House Chancery Lane**
**London WC2A 1QU (GB)**

Courier Press, Leamington Spa, England.

EP 0 122 107 B1

## Description

This invention relates to a single ended compact fluorescent lamp, and more particularly to such a lamp having means defining within an outer envelope containing an arc sustaining atmosphere, a folded arc path such that the distance between the electrical lead-ins to electrodes at respective ends of said arc path is substantially less than the length of said arc path, whereby unwanted arcing between said lead-ins can take place.

Such lamps are known, for example, from JP—A—57—44958 and JP—A—57—61253. In these lamps arcing between the electrical lead-ins is prevented by enclosing them within spacers fitting in an arc-tight manner between the outer envelope and the means defining the arc path. This requires a relatively complicated mechanical construction, however, and it would be preferable to insulate the lead-ins in such a manner that they can be arranged with a free space between them. There is, however, a problem in providing such lead-ins with effective electrical insulation that is comparable with the requirement that they be sealed within the wall of the outer envelope, and it is an object of the invention to overcome this problem.

The invention accordingly provides a lamp of the kind initially referred to which is characterised in that portions of said lead-ins are arranged to enter said outer envelope with a free space between them and adjacent one another at a location outside said arc path but within said arc sustaining atmosphere and that said portions of said lead-ins are provided with an oxide coating having an electrical resistance of at least $10^4$ ohms per centimetre of length, which is sufficient to increase the arcing potential there-between to a potential greater than the potential difference required between said electrodes to achieve normal operation of the lamp.

According to a further aspect of the invention there is provided a method of forming said oxide coating on the lead-ins of the aforementioned fluorescent lamp, which is characterised in that it comprises the steps of: forming a given length of said lead-ins; and heating said given length of said lead-ins with a gas-oxygen flame to a sufficient temperature and for a sufficient length of time to provide thereon an oxide coating having an electrical resistance of at least $10^4$ ohms per centimetre of said given length. Another such method according to the invention is characterised in that it comprises the steps of: forming a given length of said electrical lead-ins; and passing an electrical current through said given length of said electrical lead-ins, in an oxygen atmosphere, said electrical current being sufficient to heat said given length of said lead-ins to red heat for a sufficient length of time to provide thereon an oxide coating having an electrical resistance of at least $10^4$ ohms per centimetre of said given length.

The invention is illustrated by way of example in the accompanying drawings, in which:

FIG. 1 is an exploded, perspective view of a lamp in which the invention can be employed; and

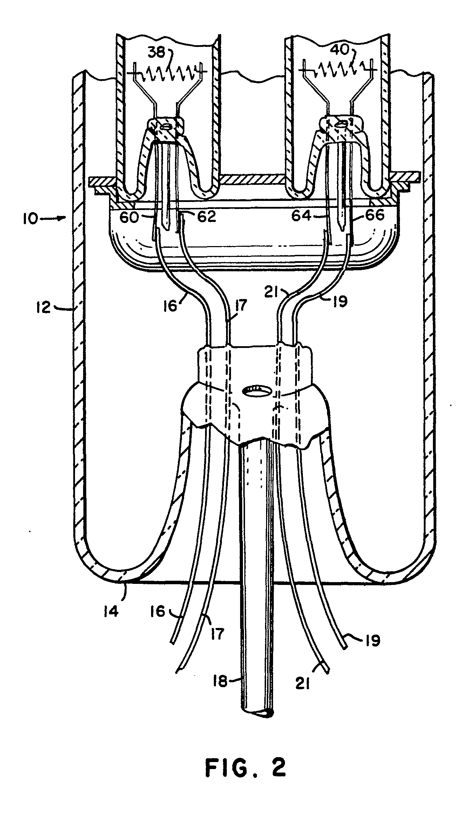

FIG. 2 is an enlarged, sectional view of a portion of the lamp of FIG. 1.

For a better understanding of the present invention, together with other and further objects advantages and capabilities thereof, reference is made to the following disclosure and appended claims taken in conjunction with the above-described drawings.

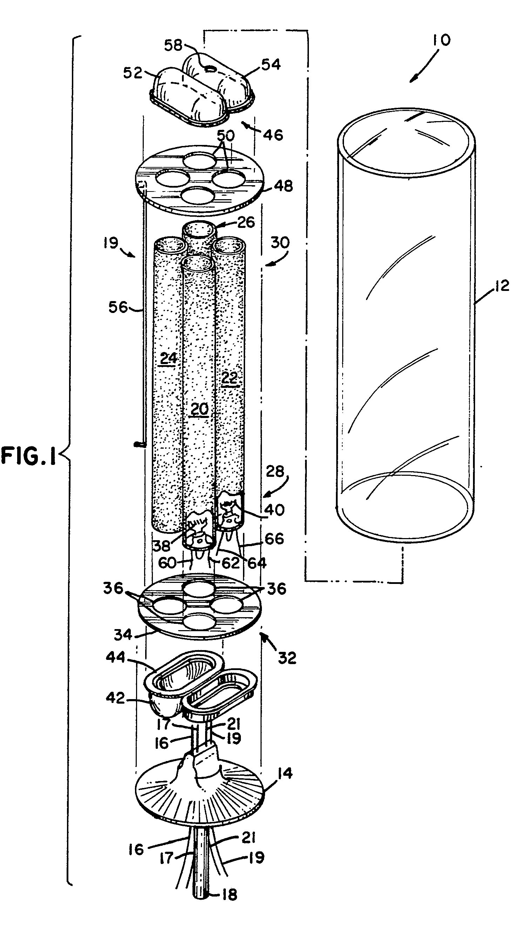

Referring now to the drawings with greater particularity, there is shown in FIG. 1 a lamp 10 with which the invention can be advantageously employed.

Lamp 10 is a single ended, compact fluorescent lamp having an outer envelope 12 which is hermetically sealed to a flare 14 which includes a dense arrangement of lead-in wires 16, 17, 19 and 21, and an exhaust tubulation 18. An arc generating and sustaining atmosphere, e.g., about 20mg of mercury and argon at a pressure of 3 torr is provided within envelope 12.

Also provided within envelope 12 is an assembly 19 comprised of a plurality of tubes 20, 22, 24 and 26 each having a first end 28 and a second end 30. The tubes are coated on their interior surface with a suitable U.V. excitable phosphor.

A first arc directing means 32 is associated with first ends 28 of tubes 20, 22, 24 and 26 and comprises a first base member 34 having apertures 36 therein for receiving the first ends 28 of the tubes.

Two of the tubes, e.g., 20 and 22 have their first ends 28 provided with electrodes 38 and 40, respectively. While these electrodes may be sealed into the tube ends in a conventional manner for convenience in handling, it is not necessary that a hermetic seal be formed, and the electrodes may be mounted within the tubes in any desired manner.

A single arc director 42 is positioned on the underside of first base member 34 and covers the apertures into which the first ends 28 of tubes 24 and 26 are fitted. As shown, arc director 42 is in the form of a rectangular dish having a peripheral rim 44 about its open side. The arc director 42 is affixed to the underside by any suitable means, if it is formed separate from first base member 34, although the entire arc directing means 34 can be formed as a one piece unit.

A second arc directing means 46 is associated with the second ends 30 of tubes 20, 22, 24 and 26 and comprises a second base member 48 having apertures 50 therein for receiving the second ends 30 of the tubes.

The upper side of the second base member 48, i.e., the side remote from the tubes, has two arc directors 52 and 54 positioned thereon. The arc directors 52 and 54 can be of the same construction as arc director 42. Arc director 52 encompasses the apertures receiving the second ends 30 of the tubes 20 and 24; and arc director 54 encompasses the apertures receiving the second ends 30 of the tubes 22 and 26.

A connecting rod 56 of, e.g., steel, extends between first base member 34 and the second base member 48 and is affixed thereto, as by welding, thus securing the assembly 19 together as a unit.

The fit between the various ends of the tubes within the apertures of the base members is merely a mechanical one that is characterised as being arc tight but permeable to the arc generating and sustaining medium that is present within the hermetically sealed outer envelope 12. To aid in evacuating and to insure that the medium penetrates within the tubes, at least one of the arc directors, e.g., 54, is provided with an opening 58 therein.

Electrode 38 is mounted between supports 60 and 62 and electrode 40 is mounted between supports 64 and 66. Supports 60 and 62 are electrically connected to lead-ins 16 and 17, respectively; and supports 64 and 66 are electrically connected to lead-ins 21 and 19, respectively.

All of the supports and lead-ins are provided with a highly adherent, electrically insulating coating thereon, the coating providing an arcing potential between the lead-ins that is greater than the normal operating potential difference between them.

In a preferred embodiment the supports and lead-ins are formed from an alloy comprised of 52 wgt. percent nickel and 48 wgt. percent iron. Such an alloy is available under the name Niron® from Amax Speciality Metals Corporation, Orangeburg, SC. The highly adherent coating in this preferred embodiment is provided by oxidizing the surface of the supports and lead-ins.

With the lead-ins formed from a suitable alloy having a diameter between 0.013 and 0.025 inches (0.33 and 0.635 mm), an oxide coating can be provided by heating the lead-ins, and supports, to red heat (approx. 900°C) for about 5 seconds by playing a gas-oxygen flame upon the surface of the nickel-iron alloy. This procedure forms a very adherent oxide coating on the surface. The contact resistance of the coating is about $10^4$ ohms per centimeter of length.

An alternative, and preferred method of obtaining a similar coating comprises passing an electric current through the lead-ins, in an oxidizing atmosphere, e.g., air, the intensity of the current being sufficient to heat the lead-ins to red heat.

To insure weldability of the lead-ins and supports the ends thereof can be suitably heat-sinked during the oxidizing procedures. Alternatively, the lightly oxidized ends can be swaged, the swaging lowering the surface contact resistance sufficiently to obtain good welds. If desired the welded areas, e.g., where the supports are attached to the lead-ins, could be subsequently re-oxidized.

When employed in a lamp with a normal operating potential of about 120 volts, an arcing potential of greater than 500 volts will be provided by the lead-ins described herein, thus insuring that, on starting, the desired arc path is followed and shorting between the densely packed lead-ins is avoided.

The coating is highly adherent; remains flexible; and provides no deleterious gas generation during operation.

## Claims

1. A single ended compact fluorescent lamp having means (20, 22, 24, 26) defining within an outer envelope (12), containing an arc sustaining atmosphere, a folded arc path such that the distance between electrical lead-ins (16, 17, 19, 21) to electrodes (38, 40) at respective ends of said arc path is substantially less than the length of said arc path, whereby unwanted arcing between said lead-ins can take place, characterised in that portions of said lead-ins are arranged to enter said outer envelope (12) with a free space between them and adjacent one another at a location outside said arc path but within said arc sustaining atmosphere and that said portions of said lead-ins are provided with an oxide coating having an electrical resistance of at least $10^4$ ohms per centimetre of length, which is sufficient to increase the arcing potential therebetween to a potential greater than the potential difference required between said electrodes (38, 40) to achieve normal operation of the lamp.

2. A lamp as claimed in Claim 1, characterised in that said electrical lead-ins are made of a nickel-iron alloy.

3. A lamp as claimed in Claim 2, characterised in that said nickel-iron alloy is comprised of 52 wgt. percent nickel and 48 wgt. percent iron.

4. A lamp as claimed in any one of Claims 1—3, characterised in that said normal operating potential of said lamp is about 120 volts and said arcing potential is greater than 500 volts.

5. A method of forming an electrically insulating oxide coating on the electrical lead-ins of the fluorescent lamp according to Claims 1—4, characterised in that it comprises the steps of: forming a given length of said lead-ins; and heating said given length of said lead-ins with a gas-oxygen flame to a sufficient temperature and for a sufficient length of time to provide thereon an oxide coating having an electrical resistance of at least $10^4$ ohms per centimetre of said given length.

6. A method as claimed in Claim 5, characterised in that said heating step raises said electrical lead-ins to a temperature of about 900° for about 5 seconds.

7. A method of forming an electrically insulating oxide coating on the electrical lead-ins of the fluorescent lamp according to Claims 1—4, characterised in that it comprises the steps of: forming a given length of said electrical lead-ins; and passing an electrical current through said given length of said electrical lead-ins, in an oxygen atmosphere, said electrical current being sufficient to heat said given length of said electrical lead-ins to red heat for a sufficient length of time to provide thereon an oxide coating having an electrical resistance of at least $10^4$ ohms per centimetre of said given length.

## Patentansprüche

1. Einseitig gesockelte kompakte Leuchtstofflampe mit Elementen (20, 22, 24, 26), die innerhalb einer äußeren Hülle (12), die eine eine Bogenentladung unterstützende Atmosphäre enthält, einen gefalten Bogenentladungsweg bilden, derart, daß der Abstand zwischen elecktrischen Zuleitungen (16, 17, 19, 21) und Elektroden (38, 40) an den jeweiligen Enden des Bogenwegs erheblich kleiner ist als die Länge des Bogenwegs, wodurch unerwünschte Überschläge zwischen den Zuleitungen auftreten können, dadurch gekennzeichnet, daß Teilbereiche der Zuleitungen derart angeordnet sind, daß sie einander benachbart und mit einem freien Raum zwischen sich an einer Stelle außerhalb des Bogenweges, jedoch innerhalb der die Bogenentladung unterstützenden Atmosphäre in die äußere Hülle (12) eintreten, und daß diese Teile der Zuleitungen mit einem Oxidüberzug versehen sind, der einen elektrischen Widerstand von zumindest $10^4$ Ohm pro Längenzentimeter aufweist, welcher ausreicht, um dads Überschlagspotential zwischen ihnen auf ein Potential zu vergrößern, das größer is als die Potentialdifferenz, die zwischen den Elektroden (38, 40) erforderlich ist, um einen normalen Betrieb der Lampe zu erzielen.

2. Lampe nach Anspruch 1, dadurch gekennzeichnet, daß die elektrischen Zuleitungen aus einer Nickel-Eisen-Legierung hergestellt sind.

3. Lampe nach Anspruch 2, dadurch gekennzeichnet, daß die Nickel-Eisen-Legierung aus 52 Gewichtsprozenten Nickel und 48 Gewichtsprozenten Eisen besteht.

4. Lampe nach irgendeinem der Ansprüche 1—3, dadurch gekennzeichnet, daß das normale Betriebspotential der Lampe etwa 120 V beträgt und das Überschlagspotential größer ist als 500 V.

5. Verfahren zur Bildung eines elektrisch isolierenden Oxidüberzugs auf den elektrischen Zuleitungen der Leuchtstofflampe nach den Ansprüchen 1—4, dadurch gekennzeichnet, daß es aus den folgenden Schritten besteht: Bildung einer vorgegebenen Länge der Zuleitungen; Aufheizung der vorgegebenen Länge der Zuleitungen mit einer Gas-Sauerstoff-Flamme auf eine ausreichende Temperatur und für eine ausreichende Zeitspanne, um darauf einen Oxidüberzug mit einem elektrischen Widerstand von zumindest $10^4$ Ohm pro Zentimeter der vorgegebenen Länge zu bilden.

6. Verfahren nach Anspruch 5, dadurch gekennzeichnet, daß der Aufheizungsschritt die elektrischen Zuleitungen für etwa fünf Sekunden auf eine Temperatur von etwa 900° anhebt.

7. Verfahren zur Bildung eines elektrisch isolierenden Oxidüberzugs auf den elektrischen Zuleitungen der Leuchtsstofflampe nach den Ansprüchen 1—4, dadurch gekennzeichnet, daß es aus den folgenden Schritten besteht: Bildung einer vorgegebenen Länge der elektrischen Zuleitungen; Hindurchschicken eines elektrischen Stroms durch die vorgegebenen Länge der elektrischen Zuleitungen, in einer Sauerstoffatomsphäre, wobei der elektrische Strom ausreicht, um die vorgegebene Länge der elektrischen Zuleitungen für eine ausreichende Zeitspanne auf Rotwärme zu heizen, um auf ihnen einen Oxidüberzug mit einem elektrischen Widerstand von zumindest $10^4$ Ohm pro Zentimeter der vorgegebenen Länge zu bilden.

## Revendications

1. Lampe fluorescente compacte à extrémité unique comprenant des moyens (20, 22, 24, 26) définissant à l'intérieur d'une ampoule externe (12) contenant un gaz favorisant un arc, un chemin recourbé pour un arc tel que la distance entre les entrées de courant (16, 17, 19, 21) et les électrodes (38, 40) aux extrémités respectives du dit chemin d'arc soit substantiellement inférieure à la longueur du dit chemin d'arc, de manière à rendre possible la création involontaire d'un arc entre les dites entrées de courant, caractérisée en ce que des parties des dites entrées de courant (12) sont arrangées pour pénétrer dans la dite ampoule externe (12) côte à côte et séparées l'une de l'autre, en un emplacement situé hors du dit chemin d'arc, mais dans le gaz favorisant l'arc, et que les dites parties des dites entrées de courant comportent un revêtement d'oxyde présentant une résistance électrique d'au moins $10^4$ Ohms par centimètre de longueur, qui est suffisante pour augmenter le potentiel d'arc entre elles jusqu'à un potentiel supérieur à la difference de potentiel requise entre les dites électrodes (38, 40) pour obtenir un fonctionnement normal de la lampe.

2. Lampe selon la revendication 1 caractérisée en ce que les dites entrées de courant électriques sont réalisées en un alliage fer-nickel.

3. Lampe selon la revendication 2 caractérisée en ce que le dit alliage fer-nickel comprend 52% en poids de nickel et 48% en poids de fer.

4. Lampe selon l'une quelconque des revendications 1 à 3 caractérisée en ce que le dit potentiel normal de fonctionnement de la dite lampe est 120 Volts environ et que le dit potentiel d'arc est supérieur à 500 Volts.

5. Procédé pour former un revêtement d'oxyde électriquement isolant sur les entrées de courant de la lampe fluorescente selon les revendications 1 à 4, caractérisé en ce qu'il comprend les étapes suivantes: mise en forme d'une longueur donnée des dites entrées de courant; et passage de la dite longueur donnée des dites entrées de courant à la flame d'un chalumeau au gaz-oxygène pour la chauffer à une température suffisante et pendant un temps suffisant pour déterminer dessus un revêtement d'oxyde présentant und résistance électrique d'au moins $10^4$ Ohms par centimètre de la dite longueur donnée.

6. Procédé selon la revendication 5 caractérisé en ce que la dite étape de chauffage met la température des dites entrées de courant életriques à 900°C environ en 5 secondes environ.

7. Procédé pour former un revêtement électriquement isolant sur les entrées de courant électriques de lampes fluorescentes selon les revendications 1 à 4, caractérisé en ce qu'il comprend les étapes suivantes: mise en forme d'une longueur donnée des dites entrées de courant électriques; et

Passage d'un courant électrique dans la dite longueur donnée des dites entrées de courant électriques, sous oxygène, le dit courant électrique étant suffisant pour chauffeur au rouge la dite longueur donnée des dites entrées de courant électriques pendant un temps suffisant pour déterminer dessus un revêtement d'oxyde présentant une résistance électrique d'au moins $10^4$ Ohms per centimètre de la dite longueur donnée.

FIG.1

FIG. 2